# EUROPÄISCHE PATENTSCHRIFT

(11) **EP 1 717 168 B1**
(45) Veröffentlichungstag und Bekanntmachung des Hinweises auf die Patenterteilung: **09.07.2008**
(21) Anmeldenummer: 06002209.2
(22) Anmeldetag: 03.02.2006
(51) Int. Cl.: B65G 13/071, B65G 47/26

(54) **Transportrolle**
Transport roller
Rouleau de transport

(30) Priorität: 28.04.2005 DE 102005020182
(43) Veröffentlichungstag der Anmeldung: 02.11.2006
(73) Patentinhaber: TRAPOROL Förderelemente GmbH, 48712 Gescher (DE)
(72) Erfinder: Hölscher, Reinhard, Dr., 33154 Salzkotten (DE); Hermann, Kai, 42929 Wermelskirchen (DE); Steffan, Thomas, 48599 Gronau-Epe (DE)
(74) Vertreter: LENZING GERBER

(56) Entgegenhaltungen:
- DE-A1- 3 408 125
- DE-A1- 3 616 840
- DE-A1- 3 720 609
- DE-A1- 4 201 499
- GB-A- 2 219 781
- US-A- 4 325 474
- US-A- 4 503 970
- US-A- 5 485 911

## Beschreibung

Die vorliegende Erfindung betrifft eine Transportrolle nach dem Oberbegriff des Anspruchs 1.

DE 37 20 609 A1 beschreibt eine Transportrolle für eine Rollenbahn, bei der ein durch eine Kette angetriebenes Antriebsteil über einen Kunststoffkonus mit einem Rollenteil gekoppelt ist, wobei ein einstellbares Federelement das Rollenteil mittels einer konischen Anlagefläche gegen das Antriebsteil drückt. Hierdurch ist eine Grenzmomentkupplung ausgebildet, so dass das Rollenteil ein maximales Drehmoment durch das Antriebsteil erfährt, wogegen bei Überschreitung dieses Drehmoments eine durch Gleitreibung bedingte Momentübertragung des Antriebsteils auf das Rollenteil stattfindet. Durch derartige auch Friktionsrollen genannte Transportrollen sind in bestimmten Bereichen einer Fördereinrichtung Transportgeschwindigkeiten und Staudrücke des transportierten Gutes limitierbar und einstellbar.

Der gattungsbildende Stand der Technik ist in dem Dokument DE 34 08 125 A1 beschrieben. Bei dieser Transportrolle ist eine Konuskupplung zur Umschaltung von einem Friktionsantrieb in einen drehmomentstarren Antrieb vorgesehen. Die Kupplung ist nicht in Axialrichtung vorgespannt, wodurch der erzielte Reibschluss nicht genau definiert ist.

Es ist die Aufgabe der Erfindung, eine Transportrolle anzugebein, deren umschaltbare Kupplung derart ausgebildet ist, dass ein bestimmter Reibwert erzielbar ist und insbesondere ein versehentliches Einrücken der Kupplung vermieden wird.

Diese Aufgabe wird für eine eingangs genannte Transportrolle erfindungsgemäß mit den kennzeichnenden Merkmalen des Anspruchs 1 gelöst.

Durch die Selektierbarkeit der beiden Zustände des Kupplungsmittels ist es zum einen möglich, unter bestimmten Anforderungen an das die Transportrolle umfassende Fördermittel einen Antrieb mit einem Grenzmoment der Transportrolle zur Realisierung eines bestimmten Förderdrucks einzustellen. Unter anderen, ggf. zu Stoßzeiten auftretenden Betriebsbedingungen kann dagegen ohne ein Auswechseln der Rolle eine drehmomentschlüssige Kupplung realisiert werden, so dass die gesamten Antriebskräfte des Antriebsmittels auf die Transportrolle übertragen werden und die Drehgeschwindigkeiten von Antriebsabschnitt und Rollenteil immer gleich sind. Bisher war es erforderlich, eine Transportrolle des Friktionstyps durch eine feste bzw. drehmomentschlüssige Transportrolle auszutauschen. Dieser Aufwand ist durch die erfindungsgemäße Transportrolle zumindest erheblich reduziert. Dabei ist vorgesehen, dass der Rollenteil der Transportrolle in Richtung einer Drehachse gegenüber dem Antriebsteil verschiebbar gelagert ist und dass der Rollenteil durch ein erstes Federmittel in axialer Richtung von dem Antriebsteil weg kraftbeaufschlagbar ist. Zur Sicherstellung eines fehlerfreien Betriebs ist bevorzugt der Rollenteil durch ein zweites Federmittel in axialer Richtung auf den Antriebsteil zu kraftbeaufschlagbar. In Verbindung mit dem ersten Federmittel wird hierdurch das Rollenteil durch zwei in Gegenrichtung wirkende Federmittel in einer Gleichgewichtsposition in axialer Richtung gehalten, wobei auch Kraftstöße eines transportierten Guts in axialer Richtung auf einfache Weise gedämpft werden. Hierdurch lässt sich auf einfache Weise sowohl ein Drehmomentschluss des Kupplungsmittels gemäß dem zweiten Zustand als auch eine Einstellung der Kupplungsstärke bzw. eines Grenzmoments in dem ersten Zustand realisieren. Weiter können Kraftstöße in axialer Richtung bei geeigneter Abstimmung der Feder nicht zu einem unbeabsichtigten Einrücken der Kupplung führen.

In zweckmäßiger Ausführung umfasst das Kupplungsmittel eine erste, an dem Antriebsmittel angeordnete Reibfläche und eine zweite, an dem Rollenteil angeordnete Reibfläche, wobei mittels der ersten Reibfläche eine Kraft auf die zweite Reibfläche ausübbar ist. Besonders bevorzugt sind die Reibflächen dabei jeweils rotationssymmetrische Konusflächen, die im wesentlichen den gleichen Konuswinkel gegenüber einer Drehachse des Rollenteils aufweisen. Hierdurch ist insgesamt auf einfache Weise eine erfindungsgemäße Transportrolle ausbildbar.

Besonders bevorzugt ist der Konuswinkel kleiner als der Reibungswinkel der Reibflächen. Unter dem Reibungswinkel ist dabei der Grenzwinkel zu verstehen, bei dem hinsichtlich der gegebenen Oberflächenpaarung der Reibflächen noch eine Selbsthemmung der Flächen bei Belastung auftritt. Sofern der Konuswinkel kleiner als der Reibungswinkel ist, ist ein Abrutschen der Flächen unter Last systembedingt verhindert.

Bevorzugt besteht zumindest eine der Reibflächen aus einem Kunststoff. Besonders bevorzugt ist die Reibfläche dabei an einem Kunststoffteil ausgebildet, welches als Einsatz in einem insbesondere aus Metall bestehenden Teil von Antriebsabschnitt oder Rollenteil ausgeformt ist. Insgesamt ist hierdurch eine leichte Herstellbarkeit mit einer kostengünstigen und praxistauglichen Ausbildung einer Reibungskupplung verbunden.

In zweckmäßiger Ausführung ist der Kunststoff dabei ein Polyoxymethylen (POM). Versuche haben ergeben, dass dieser Kunststoff aufgrund seiner Eigenschaften in besonderem Maße zur Ausbildung des Kupplungsmittels einer erfindungsgemäßen Transportrolle geeignet ist. Bevorzugt kann der Kunststoff auch mit Zusätzen wie etwa Glasfasern versehen sein, um seine mechanischen Eigenschaften weiter zu verbessern.

In bevorzugter Ausführung ist allgemein in dem ersten Zustand des Kupplungsmittels das Drehmoment von einer Auflagelast abhängig, wobei ein Verhältnis zwischen Auflagelast und Drehmoment mittels einer Stellvorrichtung einstellbar ist. Durch die Einstellbarkeit mittels der Stellvorrichtung wird die Flexibilität der Transportrolle weiter erhöht, wobei die Abhängigkeit des Drehmoments von der Auflagelast nicht nur zweckmäßig, sondern auch auf einfache Weise technisch realisierbar ist.

Allgemein bevorzugt weist der Antriebsabschnitt der Transportrolle ein Kettenrad zur Aufnahme einer Antriebskette auf, wodurch die Transportrolle in verbreitete bestehende Fördermittel integrierbar ist.

Weitere Vorteile und Merkmale ergeben sich aus dem nachfolgend beschriebenen Ausführungsbeispiel sowie aus den abhängigen Ansprüchen.

Nachfolgend wird ein besonders bevorzugtes Ausführungsbeispiel einer Transportrolle beschrieben und anhand der anliegenden Zeichnungen näher erläutert.
- Fig. 1: zeigt eine schematische Seitenansicht einer erfindungsgemäßen Transportrolle in einem drehmomentsschlüssigen Kupplungszustand.
- Fig. 2: zeigt eine Schnittansicht eines dem Rollenteil zugeordneten Kunststoffteils.
- Fig. 3: zeigt eine Schnittansicht eines dem Antriebsabschnitt zugeordneten Kunststoffteils.

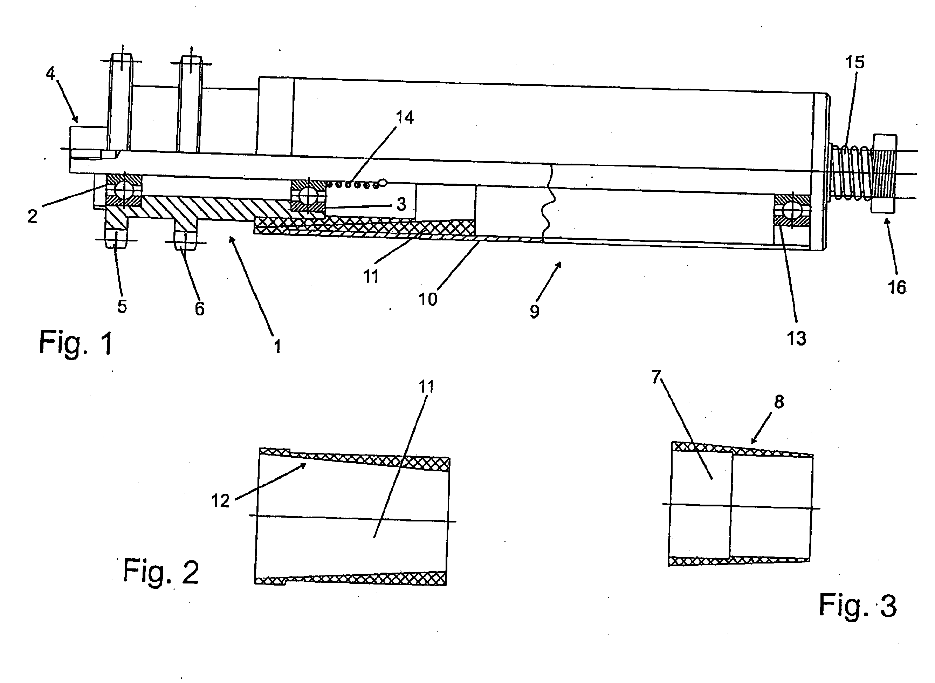

Die Transportrolle gemäß Fig. 1 umfasst einen Antriebsabschnitt 1, welcher mittels Kugellagern 2, 3 auf einer starren Achse 4 drehbar und in axialer Richtung unverschieblich gelagert ist. Der Antriebsabschnitt 1 weist zwei Kettenräder 5, 6 auf, mittels derer der Antriebsabschnitt 1 antreibar um die Achse 4 drehbar ist, wobei eine Antriebskette nicht dargestellt ist. Im Allgemeinen treibt die Antriebskette eine Mehrzahl von Transportrollen eines Fördermittels an.

Der Antriebsabschnitt 1 besteht im Wesentlichen aus Stahl und weist an seiner den Kettenrädern 5, 6 gegenüberliegenden Seite eine zylindrische Öffnung auf, in die ein erstes Kunststoffteil 7 drehfest eingesetzt ist. Die Drehfestigkeit kann dabei durch Verpressung, Verklebung oder nicht dargestellte formschlüssige Mittel sichergestellt werden. Das Kunststoffteil 7 besteht aus Polyoxymethylen (POM). Es hat eine kegelabschnittförmige beziehungsweise konusförmige Außenfläche 8, die zu der Achse 4 beziehungsweise einer Drehachse der Transportrolle rotationssymmetrisch verläuft. Die Konusfläche 8 hat einen Konuswinkel von etwa 3,7° gegenüber der Achse 4 (d.h. 7,4° Konus-Vollwinkel) .

Ferner umfasst die Transportrolle einen Rollenteil 9, der eine metallische zylindrische Lauffläche 10 aufweist, welche als einziger Bestandteil der Transportrolle mit einem zu fördernden Transportgut in Kontakt kommt.

In den metallischen Zylinder 10 ist ein zweites Kunststoffteil 11 drehfest eingesetzt, welches eine konische Innenumfangsfläche 12 aufweist. Diese hat den gleichen Konuswinkel von 3,7° wie das erste Kunststoffteil 7 bzw. die erste Kunststofffläche 8. Im montierten Zustand der Transportrolle (siehe Fig.1) greift das erste Kunststoffteil 7 mit seiner konischen Außenumfangsfläche 8 in das zweite Kunststoffteil 11 mit seiner konischen Innenumfangsfläche 12 ein, so dass die beiden Flächen 8, 12 als Reibflächen aneinander wirken. Insgesamt ist durch die Kunststoffteile 7, 11 bzw. deren Reibflächen 8, 12 ein Kupplungsmittel ausgebildet, mittels dessen eine Drehbewegung des Antriebsabschnitts 1 um die Achse 4 herum auf den Rollenteil 9 übertragbar ist.

Der Rollenteil 9 ist in dem bezüglich der Kettenräder 5,6 entgegengesetzten Endbereich der Achse 4 über ein Lager 13 drehbar gegenüber der Achse 4 gelagert, wobei das Lager 13 in axialer Richtung gegenüber der Achse 4 verschiebbar auf der Achse 4 aufgenommen ist. Hierdurch kann insgesamt der Rollenteil 9 gegenüber dem Antriebsabschnitt 1 in axialer Richtung bewegt werden.

Ein erstes Federmittel 14 ist einerseits gegen das Lager 3 des Antriebsabschnitts 1 und andererseits gegen das Rollenteil 9 abgestützt, so dass durch das vorgespannte Federmittel 14 eine das Rollenteil von dem Antriebsabschnitt in axialer Richtung wegbewegende Kraft ausgeübt wird.

Ein zweites Federmittel 15 ist einerseits gegen einen auf der Achse 4 ausgebildeten Anschlag abgestützt und andererseits gegen das Lager 13 des Rollenteils 9. Durch eine Vorspannung des zweiten Federmittels 15 wird somit das Rollenteil 9 in axialer Richtung in Richtung auf den Antriebsabschnitt 1 zu kraftbeaufschlagt. Die Vorspannung ist dabei mittels einer Einstellvorrichtung 16 einstellbar, welche auf einfache Weise als Stellschraube ausgebildet ist, die über ein Gewinde an der Achse 4 aufgenommen ist.

Insgesamt üben die Federmittel 14, 15 somit entgegengesetzte Kräfte aus. Durch die Stellschraube 16 ist eine Gleichgewichtsposition des Rollenteils 9 in axialer Richtung einstellbar.

### Die Erfindung funktioniert nun wie folgt:

In dem in Fig. 1 gezeigten Zustand liegen die konischen Reibflächen 8, 12 vollständig aufeinander, so dass zwischen diesen Flächen eine Haftreibung besteht. Diese Haftreibung ist ggf. dadurch unterstützt, dass die Kunststoffteile 7, 11 durch ein kräftiges Aufschieben des Rollenteils 9 auf den Antriebsabschnitt 1 eine elastische Spannung erfahren haben. Das Aufschieben kann auch durch leichte Schläge mit einem Hammer unterstützt sein. Da der Konuswinkel von 3,7° kleiner ist als der Reibungswinkel der Reibflächen 8, 12, führt eine zu der Achse 4 senkrechte Kraftbeaufschlagung auf das Rollenteil 9, etwa durch ein Transportgut, nicht zu einem Lösen der Haftreibungsverbindung zwischen Antriebsabschnitt 1 und Rollenteil 9. Die Größe der Konusflächen 8, 12 ist dabei so bemessen, dass durch die Haftreibung in jedem Fall ein bezüglich der Kräfte der transportierten Güter beliebiges oder unlimitiertes Drehmoment übertragbar ist. Faktisch liegt somit ein drehmomentschlüssiger Zustand des Kupplungsmittels 7, 8, 11, 12 vor. Insbesondere ist die Haftreibung in axialer Richtung auch so groß, dass das vorgespannte erste Federmittel 14 kein Lösen des Kupplungsmittels 7, 8, 11, 12 bewirken kann.

Ein anderer Zustand des Kupplungsmittels 7, 8, 11, 12, in dem es als Grenzmomentkupplung funktioniert, wird dann erreicht, wenn die Reibflächen 8, 12 aus ihrem Zustand der Haftreibung befreit werden, etwa durch ein kräftiges Ziehen des Rollenteils 9 von der Antriebsabschnitt 1 weg (durch eine Bedienperson) oder durch unterstützende Schläge mittels eines Hammers in dieser Richtung. Sobald die Haftreibung gelöst ist, nimmt das Rollenteil 9 eine durch die eingestellten Kräfte der Federmittel 14, 15 bedingte Gleichgewichtsposition ein. In dieser Position (nicht dargestellt) liegen die Reibflächen 8, 12 nicht über ihren gesamten Umfang aneinander. Vielmehr berühren sie sich lediglich über einen Teilumfang, der in dem hinsichtlich der Schwerkraft oberen Bereich der Transportrolle liegt. Im Bereich der Reibflächen 8, 12 existiert in diesem Zustand ein radiales Spiel von z.B. einem halben Millimeter bei einer Länge des Rollenteils von etwa 30 cm. Ein solches Spiel bedingt zwar eine Verkippung des Rollenteils 9 bezüglich der Drehachse 4, jedoch ist diese Verkippung hinsichtlich der Transporteigenschaften der Rolle nicht wesentlich. Die Verkippung ist auch durch das Lager 13 ohne weiteres aufnehmbar, da ein Kippwinkel von rund 0,5 mm auf 30 cm eher vernachlässigbar ist.

In Abhängigkeit von der genauen Positionierung des Rollenteils 9 in axialer Richtung ist zudem die Größe des Kontakts der Reibflächen 8, 12 miteinander in gewissem Rahmen einstellbar. Diese Kontaktfläche ist umso größer, je weiter der Rollenteil gemäß Fig. 1 nach links positioniert ist.

Insgesamt wird somit bei Vorliegen eines durch ein Transportgut bedingten Widerstandes das angetriebene Kunststoffteil 11 gegenüber dem durch das Transportgut gehemmten Kunststoffteil 7 reibend durchschlüpfen, wobei die Größe der Reibung durch Oberflächenbeschaffenheit und Material der Kunststoffteile 7, 11 bedingt sind. Je höher das Gewicht des Transportgutes bzw. die auf das Rollenteil 9 ausgeübte Kraft, desto höher ist das durch die Reibung übertragene Drehmoment. Je weiter das Rollenteil 9 durch die einstellbare Vorspannung des zweiten Federmittels 15 auf den Antriebsabschnitt 1 zu positioniert ist, desto größer wird die Kontaktfläche der beiden Kunststoffteile 7, 11 und desto größer wird das bei gegebener Gewichtskraft des Transportgutes übertragene maximale Drehmoment.

## Patentansprüche

1. Transportrolle, umfassend
einen drehbaren Rollenteil (9) mit einer Lauffläche und einen antreibbar drehbaren Antriebsabschnitt (1), wobei ein Drehmoment durch ein Kupplungsmittel (7, 8, 11, 12) von dem Antriebsabschnitt (1) auf den Rollenteil (9) übertragbar ist und zumindest zwei Zustände des Kupplungsmittels (7, 8, 11, 12) selektierbar sind, wobei in einem ersten Zustand des Kupplungsmittels (7, 8, 11, 12) ein Drehmoment mittels Gleitreibung auf das Rollenteil (9) übertragbar ist,
und wobei in einem zweiten Zustand des Kupplungsmittels (7, 8, 11, 12) der Antriebsabschnitt (1) und das Rollenteil (9) drehmomentschlüssig miteinander verbunden sind
**dadurch gekennzeichnet, dass**
der Rollenteil (9) in Richtung einer Drehachse (4) gegenüber dem Antriebsteil (1) verschiebbar gelagert ist, und dass der Rollenteil (9) durch ein erstes Federmittel (14) in axialer Richtung von dem Antriebsteil (1) weg kraftbeaufschlagbar ist.

2. Transportrolle nach Anspruch 1, **dadurch gekennzeichnet, dass** das Kupplungsmittel (7, 8, 11, 12) eine erste, an dem Antriebsabschnitt angeordnete Reibfläche (8) und eine zweite, an dem Rollenteil (9) angeordnete Reibfläche (12) umfasst, wobei mittels der ersten Reibfläche (8) eine Kraft auf die zweite Reibfläche (12) ausübbar ist.

3. Transportrolle nach Anspruch 2, **dadurch gekennzeichnet, dass** die Reibflächen (8, 12) jeweils rotationssymmetrische Konusflächen sind, die im wesentlichen den gleichen Konuswinkel gegenüber einer Drehachse (4) der Transportrolle aufweisen.

4. Transportrolle nach Anspruch 3, **dadurch gekennzeichnet, dass** der Konuswinkel kleiner als der Reibungswinkel der Reibflächen (8, 12) ist.

5. Transportrolle nach einem der Ansprüche 2 bis 4, **dadurch gekennzeichnet, dass** zumindest eine der Reibflächen (8, 12) aus einem Kunststoff besteht.

6. Transportrolle nach Anspruch 5, **dadurch gekennzeichnet, dass** die aus Kunststoff bestehende Reibfläche (8, 12) an einem Kunststoffteil (7, 11) ausgebildet ist, welches als Einsatz für einen insbesondere aus Metall bestehenden Teil von Antriebsabschnitt oder Rollenteil ausgeformt ist.

7. Transportrolle nach Anspruch 5 oder 6, **dadurch gekennzeichnet, dass** der Kunststoff ein Polyoxymethylen (POM) ist.

8. Transportrolle nach Anspruch 1, **dadurch gekennzeichnet, dass** der Rollenteil (9) durch ein zweites Federmittel (15) in axialer Richtung auf den Antriebsteil (1) zu kraftbeaufschlagbar ist.

9. Transportrolle nach einem der vorhergehenden Ansprüche, **dadurch gekennzeichnet, dass** in dem ersten Zustand des Kupplungsmittels (7, 8, 11, 12) das übertragene Drehmoment von einer Auflagelast abhängig ist, wobei ein Verhältnis zwischen Auflagelast und Drehmoment mittels einer Einstellvorrichtung (16) einstellbar ist.

10. Transportrolle nach einem der vorhergehenden Ansprüche, **dadurch gekennzeichnet, dass** der Antriebsabschnitt (1) ein Kettenrad (5, 6) zur Aufnahme einer Antriebskette umfasst.

## Claims

1. Conveyor roller, comprising a rotatable roller part (9) with a running surface and a driveably rotatable drive portion (1), it being possible for a torque to be transmitted by a coupling means (7, 8, 11, 12) from the drive portion (1) to the roller part (9) and for at least two states of the coupling means (7, 8, 11, 12) to be selected, wherein in a first state of the coupling means (7, 8, 11, 12) a torque can be transmitted onto the roller part (9) by means of sliding friction, and wherein in a second state of the coupling means (7, 8, 11, 12) the drive portion (1) and the roller part (9) are torque-connected, **characterised in that** the roller part (9) is mounted displaceably with respect to the drive portion (1) in the direction of a pivot pin (4), and **in that** the roller part (9) can be subjected to force by a first spring means (14) in an axial direction away from the drive portion (1).

2. Conveyor roller according to Claim 1, **characterised in that** the coupling means (7, 8, 11, 12) comprises a first friction surface (8) positioned on the drive portion and a second friction surface (12) positioned on the roller part (9), it being possible for the first friction surface (8) to exert a force onto the second friction surface (12).

3. Conveyor roller according to Claim 2, **characterised in that** the friction surfaces (8, 12) are in each case rotationally symmetrical conical surfaces which have substantially the same cone angle with respect to a pivot pin (4) of the conveyor roller.

4. Conveyor roller according to Claim 3, **characterised in that** the cone angle is smaller than the friction angle of the friction surfaces (8, 12).

5. Conveyor roller according to any one of Claims 2 to 4, **characterised in that** at least one of the friction surfaces (8, 12) consists of a plastics material.

6. Conveyor roller according to Claim 5, **characterised in that** the friction surface (8, 12) consisting of plastics material is configured on a plastics material part (7, 11) which is moulded as an insert for a part, consisting in particular of metal, of the drive portion or roller part.

7. Conveyor roller according to Claim 5 or Claim 6, **characterised in that** the plastics material is a polyoxymethylene (POM).

8. Conveyor roller according to Claim 1, **characterised in that** the roller part (9) can be subjected to force by a second spring means (15) in an axial direction towards the drive portion (1).

9. Conveyor roller according to any one of the preceding claims, **characterised in that** in the first state of the coupling means (7, 8, 11, 12), the transmitted torque is a function of an applied load, it being possible to adjust a ratio between applied load and torque by means of an adjusting device (16).

10. Conveyor roller according to any one of the preceding claims, **characterised in that** the drive portion (1) comprises a chain wheel (5, 6) for receiving a driving chain.

## Revendications

1. Rouleau de transport comprenant,
un élément rouleau (9) rotatif avec une surface de roulement et une section d'entraînement (1) pouvant être entraînée en rotation, un couple pouvant être transmis par un moyen d'accouplement (7, 8, 11, 12) de la section d'entraînement (1) à l'élément rouleau (9) et au moins deux états du moyen d'accouplement (7, 8, 11, 12) pouvant être sélectionnés, dans un premier état du moyen d'accouplement (7, 8, 11, 12), un couple pouvant être transmis par frottement avec glissement à l'élément rouleau (9),
et dans un second état du moyen d'accouplement (7, 8, 11, 12), la section d'entraînement (1) et l'élément rouleau (9) étant reliés solidairement du point de vue du couple,
**caractérisé en ce que**
l'élément rouleau (9) est monté de manière à pouvoir être déplacé dans la direction d'un axe de rotation (4) par rapport à la partie d'entraînement (1) et **en ce que** l'élément rouleau (9) peut être sollicité en force par un premier moyen à ressort (14) dans la direction axiale en éloignement de la partie d'entraînement (1).

2. Rouleau de transport selon la revendication 1, **caractérisé en ce que** le moyen d'accouplement (7, 8, 11, 12) comprend une première surface de frottement (8) disposée sur la section d'entraînement et une seconde surface de frottement (12) disposée sur l'élément rouleau (9), au moyen de la première surface de frottement (8) pouvant être exercée une force sur la seconde surface de frottement (12).

3. Rouleau de transport selon la revendication 2, **caractérisé en ce que** les surfaces de frottement (8, 12) sont des surfaces coniques respectivement à symétrie de révolution qui présentent sensiblement le même angle de conicité par rapport à un axe de rotation (4) du rouleau de transport.

4. Rouleau de transport selon la revendication 3, **caractérisé en ce que** l'angle de conicité est plus petit que l'angle de frottement des surfaces de frottement (8, 12).

5. Rouleau de transport selon l'une des revendications 2 à 4, **caractérisé en ce qu'**au moins l'une des surfaces de frottement (8, 12) se compose d'une matière plastique.

6. Rouleau de transport selon la revendication 5, **caractérisé en ce que** la surface de frottement (8, 12) se composant de matière plastique est réalisée sur une pièce en matière plastique (7, 11) qui est formée comme un insert pour une partie se composant en particulier de métal de la section d'entraînement ou de l'élément rouleau.

7. Rouleau de transport selon la revendication 5 ou 6, **caractérisé en ce que** la matière plastique est un polyoxyméthylène (POM).

8. Rouleau de transport selon la revendication 1, **caractérisé en ce que** l'élément rouleau (9) peut être sollicité en force par un second moyen à ressort (15) en direction axiale vers la partie d'entraînement (1).

9. Rouleau de transport selon l'une des revendications précédentes, **caractérisé en ce que** dans le premier état du moyen d'accouplement (7, 8, 11, 12), le couple transmis dépend d'une charge d'appui, un rapport entre la charge d'appui et le couple pouvant être réglé au moyen d'un dispositif de réglage (16).

10. Rouleau de transport selon l'une des revendications précédentes, **caractérisé en ce que** la section d'entraînement (1) comprend une roue dentée à chaîne (5, 6) pour recevoir une chaîne d'entraînement.
